# EUROPÄISCHE PATENTSCHRIFT

(11) **EP 3 455 301 B1**
(45) Veröffentlichungstag und Bekanntmachung des Hinweises auf die Patenterteilung: **08.07.2020**
(21) Anmeldenummer: 17722035.7
(22) Anmeldetag: 10.05.2017
(51) Int. Cl.: C09D 5/00

(54) **KORROSIONSSCHUTZ**
CORROSION PROTECTION
PROTECTION ANTI-CORROSION

(30) Priorität: 10.05.2016 EP 16168928
(43) Veröffentlichungstag der Anmeldung: 20.03.2019
(73) Patentinhaber: Rembrandtin Lack GmbH Nfg.KG, 1210 Wien (AT)
(72) Erfinder: KRENN, Horst, 1140 Wien (AT); SIDLO, Michael, 1210 Wien (AT); BREITWIESER, Christian, 1020 Wien (AT); RAMETSTEINER, Karl, 4040 Linz (AT)
(74) Vertreter: Pföstl, Andreas
(86) Internationale Anmeldenummer: PCT/EP2017/061152
(87) Internationale Veröffentlichungsnummer: WO 2017/194587

(56) Entgegenhaltungen:
- EP-A1- 0 525 870
- LI SANXI ET AL: "Effect of organic montmorillonite on the performance of modified waterborne potassium silicate zinc-rich anti-corrosion coating", RESEARCH OF CHEMICAL INTERMEDIATES, AMSTERDAM, NL, Bd. 42, Nr. 4, 29. August 2015 (2015-08-29), Seiten 3507-3521, XP035930787, ISSN: 0922-6168, DOI: 10.1007/S11164-015-2228-6 [gefunden am 2015-08-29]
- LIUYAN ZHANG ET AL: "Anti-corrosion performance of waterborne Zn-rich coating with modified silicon-based vehicle and lamellar Zn (Al) pigments", PROGRESS IN NATURAL SCIENCE, Bd. 22, Nr. 4, 1. August 2012 (2012-08-01) , Seiten 326-333, XP055324671, CN ISSN: 1002-0071, DOI: 10.1016/j.pnsc.2012.07.001

## Beschreibung

Die vorliegende Erfindung betrifft einBeschichtungsmaterial zur Herstellung einer korrosionsbeständigen Beschichtung auf einer oxidierten und/oder hydroxylierten metallischen Oberfläche.

Nachhaltig wirksamer Korrosionsschutz auf ferro-metallischen Werkstoffen, beispielsweise, kann grundsätzlich mittels passivem und aktivem Korrosionsschutz erreicht werden.

Passiver Korrosionsschutz beruht auf einer möglichst dauerhaften Abschirmung/Abdeckung der Metalloberflächen durch wasserdichte, möglichst chemikalienbeständige, gut haftende, ausreichend elastische Schichten, üblicherweise im Bereich von 50 µm bis 300 µm Schichtdicke. Hierzu sind eine Vielzahl von Vorschlägen bekannt geworden und werden seit vielen Jahren angewandt: Bindemittel wie Bitumen, Teer, Kunstharze (Polyester, Acrylharz, Epoxid, Polyurethan, Alkydharz, trocknende Öle wie Leinöl usw.), teils in Lösungsmitteln, aber auch als wässrige Dispersionen, Emulsionen, teils als Klarlack, zumeist jedoch pigmentiert mit inerten Füllstoffen und Farbpigmenten, klassischen Rostschutzpigmenten wie Oxide von Zn, Pb und Fe, Phosphaten, Boraten und Chromaten von Pb, Fe, Zn und Cd.

Das grundsätzliche Problem dieser Schutzart liegt in der "Unterwanderung" der Schicht durch das korrosive Medium (H₂O). Für Anwendungen in besonders korrosiver Umgebung, üblicherweise durch die Gegenwart stark korrosiver Salze, insbesondere Natriumchlorid hervorgerufen, also maritime (Schiffsaußenlacke, Brücken, aber auch Industrieanlagen) oder automotive Anwendungen (Streusalzgefährdung etc.) reicht dieser passive Korrosionsschutz in der Regel nicht für die geforderten Langzeitanwendungen.

Wenn noch außergewöhnliche mechanische Belastungen, wie z.B. Steinschlag dazukommen und/oder besonders aggressive Reinigungsprozeduren üblich sind (Detergentien, Hochdruck, Säuren und Basen usw.) muss auf einen deutlich verstärkten Korrosionsschutz übergegangen werden.

Der aktive Korrosionsschutz beruht auf der Beschichtung der zu schützenden Metallteile, vorzugsweise aus Fe/Stahl durch reaktive Schichten anderer Metalle (Zn, Al, Cd, Sn usw.), die entweder durch deren Reaktion mit Luftsauerstoff und / oder Wasserdampf, eine Barriereschicht aus Oxiden bilden und/oder im Verletzungsfall der Oberfläche zusätzlich als lokale Opferanoden wirken.

Solche Schichten werden entweder galvanotechnisch (mit dem Nachteil der sogenannten "Wasserstoffversprödung", im Zuge des galvanischen Prozesses, bei bestimmten hochfesten Stählen) oder durch Schmelztauchverfahren z.B. Feuerverzinkung mit Schichtdicken von üblicherweise 50-150 µm aufgebracht, wobei auch hier die Gefahr der Wasserstoffversprödung besteht.

Als dritte, insbesondere für Kleinteile sehr gut geeignete Methode, hat sich der sogenannte "Zinklamellenüberzug" etabliert. Dies sind nicht-elektrolytisch aufgebrachte Beschichtungen aus einer Mischung von üblicherweise Zn- und/oder Aluminiumlamellen in einer organischen/anorganischen Matrix. Diese zeichnen sich besonders durch eine geringe Schichtdicke (5-15 pm) und Vermeidung der Wasserstoffversprödung aus.

Durch die Wahl der Bindemittel (Siloxane, Titanate, Epoxide usw.), die Konzentration der Zinklamellen in der Schutzschicht und die sorgfältige Verarbeitung werden Korrosionsschutzwerte erreicht, die jene von reinen Zinkschichten weit übertreffen.

Schutzschichten mit Zinklamellen sind beispielsweise in FR 286 6029, WO 02/3868, DE 600 05 210, WO 2014/009927, WO 2007/100486, WO 2011/012434, WO 2006/007985, WO 2005/090502, US 2014/0106155, US 7,740,947, US 4,026,710, DE 10 2009 051 899 und der DE 10 2012 215 512 beschrieben.

Ein wesentlicher Teil der praktischen Anwendungen der Zinklamellentechnologie hat sich auf den Korrosionsschutz von Kleinteilen (Schrauben, Muttern, Befestigungselementen usw.) konzentriert, da dort einerseits besondere Qualitätsanforderungen, getrieben durch die Automobil- und Flugzeugindustrie, bestehen und andererseits bei solchen Teilen die typischen Verarbeitungsparameter wie Einbrennen der Schichten bei teilweise über 200°C, Mehrfachbeschichtung zur Vermeidung von Fehlstellen usw. am besten beherrscht werden.

Die bisherigen Verfahren und Beschichtungsmaterialien können jedoch nicht mit aktuellen Anforderungen an Beschichtungen mithalten. Vor allem Beschichtungsmaterialien, die für großflächige, zudem sperrige Bauteile in der Automobilindustrie, beispielsweise, eingesetzt werden, sollen eine gute Haftung, Resistenz gegenüber starken Temperaturschwankungen, Streusalz, Hochdruckreiniger, Steinschlag oder sonstigen mechanischen Einflüssen aufweisen. Daher ist es essentiell, dass die Beschichtungsmaterialien, die z.B. Zinklamellen umfassen können, eine optimale Haftung auf der zu beschichtenden metallischen Oberfläche aufweist. Ebenso entscheidend ist, dass etwaige im Beschichtungsmaterial vorhandene Zinklamellen eine hohe Konzentration aufweisen, so dass eine im Wesentlichen vollflächige Abdeckung mittels Zink erzielt werden kann.

In der WO 2006/007985 wird vorgeschlagen, dass organische Bindemittel wie Acrylat, Polyester und Epoxidharz zusammen mit einer siliziumorganischen Verbindung wie Polyorganosiloxan und Silikon-Epoxy-Hybridharz, sowie Additiven und Lösungsmitteln zu einem Basislack verarbeitet werden. Die Schichten werden nach dem Auftragen und Ablüften (Trockenschichtdicke bevorzugt 15-30 pm) bei Temperaturen von bevorzugt 80-150°C eingebrannt und in der Folge mit einem Decklack (Pulverlack aus thermoplastischen Polykondensaten) endbeschichtet.

Die WO 2010/125179 schlägt als Bindemittel die Kondensationsprodukte vor, die nach gemeinsamer Hydrolyse von Methyl- und Phenyl-Alkoxysilanen mit Addukten aus Epoxysilanen mit Methylethanolamin erhalten werden. Es handelt sich in der Endformulierung (Zinkflakes, Additive usw.) um ein wässriges System für Heizkörperbeschichtungen, die eine lange Antrocknungszeit und hohe Einbrenntemperaturen erfordern.

Die EP 1675 922 schlägt ebenfalls wässrige, filmbildende polymere Siloxane als Bindemittel vor, wobei das Hauptaugenmerk in einer Eingrenzung der im Bindemittel temporär vorhanden Alkoxygruppen liegt. Auch hier werden Einbrenntemperaturen von 150°C für 20 min. gefordert.

Somit ist es ein Ziel der vorliegenden Erfindung, Beschichtungsmaterialien zur Herstellung korrosionsbeständiger Beschichtungen bereitzustellen, die die Nachteile des Standes der Technik überwinden und eine hohe Haftfestigkeit im Vergleich zu bisher bekannten Beschichtungen aufweisen.

Die vorliegende Erfindung betrifft ein Beschichtungsmaterial bzw. eine Zusammensetzung zur Herstellung einer korrosionsbeständigen Beschichtung auf einer oxidierten und/oder hydroxylierten metallischen Oberfläche umfassend
- mindestens ein Bindemittel, das reaktive Gruppen aufweist,
- mindestens ein partikuläres Oxid- und/oder Hydroxylgruppen umfassendes Metall und
- mindestens ein plättchenförmiges Oxid- und/oder Hydroxylgruppen umfassendes nichtmetallisches Partikel,
wobei das Bindemittel in der Lage ist, eine kovalente Bindung mit der Oberfläche und den Oxid- und/oder Hydroxylgruppen des mindestens einen partikulären Metalls und des mindestens einen plättchenförmigen nichtmetallischen Partikels auszubilden, wobei das mindestens eine partikuläre Metall ein Standardpotential von weniger als V aufweist, wobei das mindestens eine Bindemittel ausgewählt ist aus der Gruppe bestehend aus Alkoxysilanen, Siloxanen, Alkyltitanaten, Titanaten, Alkylzirkonaten, Zirkonaten und Gemischen davon.

Korrosionsbeständige Beschichtungsmaterialien schützen Metalle bzw. metallische Oberflächen vor Korrosion. Neben dieser Grundeigenschaft sollten derartige Beschichtungsmaterialien auch Porenfreiheit, Härte und Elastizität, Chemikalienbeständigkeit, Wärmebeständigkeit, mechanische Stabilität und UV-Beständigkeit aufweisen. Es hat sich erfindungsgemäß herausgestellt, dass es bei der Herstellung von korrosionsbeständigen Beschichtungen mit den zuvor genannten Eigenschaften von Vorteil ist, dass das Beschichtungsmaterial bzw. Teile davon mit der zu beschichtenden metallischen Oberfläche kovalente Bindungen eingehen. Das Beschichtungsmaterial bzw. Teile davon sind dabei vorzugsweise so ausgestaltet, dass am Beschichtungsmaterial, das sozusagen eine Grundschicht oder Grundierung ausbildet, eine Deckschicht, die eine hochfeste, jedoch ausreichend elastische Verschleißschicht darstellt, aufgebracht werden kann. Diese Deckschicht ist dabei ebenfalls in der Lage, kovalent am Beschichtungsmaterial oder Teilen davon gebunden zu werden. Das erfindungsgemäße Beschichtungsmaterial weist somit vorzugsweise Möglichkeiten der Bindungsfähigkeit bzw. Beständigkeit sowohl zur zu beschichtenden Oberfläche als auch zu der der Oberfläche gegenüberliegenden Seite auf.

Eine Beschichtung mit den zuvor genannten Eigenschaften kann durch Verwendung des erfindungsgemäßen Beschichtungsmaterials hergestellt werden. Diese umfasst mindestens ein Bindemittel, mindestens ein partikuläres Oxid- und/oder Hydroxylgruppen umfassendes Metall und mindestens ein plättchenförmiges Oxid- und/oder Hydroxylgruppen umfassendes nichtmetallisches Partikel. Das mindestens eine Bindemittel ist dabei in der Lage mit den Oxid- und/oder Hydroxylgruppen, insbesondere jedoch mit den Hydroxylgruppen, des partikulären Metalls und der nichtmetallischen Partikel und auch mit an der zu beschichtenden Oxid- und/oder Hydroxylgruppen umfassenden metallischen Oberfläche eine kovalente Bindung einzugehen.

Um eine korrosionsbeständige Beschichtung zu ermöglichen, weist das mindestens eine partikuläre Metall ein geringeres Standardpotential als die zu beschichtende metallische Oberfläche auf. Dadurch wird ein kathodischer Korrosionsschutz der metallischen Oberfläche ermöglicht, in dem die Metalle des Beschichtungsmaterials als Opferanode dienen.

"Standardpotential" ("E°"), wie hierin verwendet, bzw. dessen synonymisch verwendeter Begriff "elektrochemisches Potential" eines Redoxpaares (Metall/Metallion) ist die unter Standardbedingungen (Druck: 1013,25 mbar, Temperatur: 25°C, Aktivität: 1) messbare elektrische Spannung zwischen einer Wasserstoffhalbzelle und der Halbzelle jenes Redoxpaares. Als Bezugsgröße (d.h. Nullpunkt) dient das Potential einer Normalwasserstoffelektrode unter den zuvor genannten Standardbedingungen.

| **Element** | **oxidierte Form** | **Standardpotential *E*°** |
|---|---|---|
| Gold (Au) | Au⁺ | +1,69 V |
| Gold (Au) | Au³⁺ | +1,50 V |
| Gold (Au) | Au ²⁺ | +1,40V |
| Chrom (Cr) | Cr⁶⁺ | +1,33V |
| Platin (Pt) | Pt²⁺ | +1,20 V |
| Palladium (Pd) | Pd²⁺ | +0,85 V |
| Quecksilber (Hg) | Hg²⁺ | +0,85 V |
| Silber (Ag) | Ag⁺ | +0,80 V |
| Kupfer (Cu) | Cu⁺ | +0,52 V |
| Kupfer (Cu) | Cu²⁺ | +0,35 V |
| Wasserstoff **(H₂)** | **2H⁺** | **0 V** |
| Eisen (Fe) | Fe³⁺ | -0,04 V |
| Blei (Pb) | Pb²⁺ | -0,13 V |
| Zinn (Sn) | Sn²⁺ | -0,14 V |
| Molybdän (Mo) | Mo³⁺ | -0,20 V |
| Nickel (Ni) | Ni²⁺ | -0,23 V |
| Cobalt (Co) | Co²⁺ | -0,28 V |
| Thallium (Tl) | Tl⁺ | -0,34 V |
| Indium (In) | In³⁺ | -0,34 V |
| Cadmium (Cd) | Cd²⁺ | -0,40 V |
| Eisen (Fe) | Fe²⁺ | -0,41 V |
| Chrom (Cr) | Cr³⁺ | -0,76 V |
| Zink (Zn) | Zn²⁺ | -0,76 V |
| Chrom (Cr) | Cr²⁺ | -0,91 V |
| Niob (Nb) | Nb³⁺ | -1,099 V |
| Vanadium (V) | V²⁺ | -1,17 V |
| Mangan (Mn) | Mn²⁺ | -1,18 V |
| Titan (Ti) | Ti³⁺ | -1,21 V |
| Aluminium (Al) | Al³⁺ | -1,66 V |
| Titan (Ti) | Ti²⁺ | -1,77 V |
| Beryllium (Be) | Be²⁺ | -1,85 V |
| Magnesium (Mg) | Mg²⁺ | -2,362 V |
| Cer (Ce) | Ce³⁺ | -2,483 V |
| Lanthan (La) | La³⁺ | -2,522 V |
| Calcium (Ca) | Ca²⁺ | -2,87 V |
| Strontium (Sr) | Sr²⁺ | -2,89 V |
| Barium (Ba) | Ba²⁺ | -2,92 V |
| Kalium (K) | K⁺ | -2,92 V |
| Caesium (Cs) | Cs⁺ | -2,92 V |
| Rubidium (Rb) | Rb⁺ | -2,98 V |
| Lithium (Li) | Li⁺ | -3,04 V |

Verfahren zur Bestimmung des Standardpotentials sind dem Fachmann hinreichend bekannt.

Die Oxid- und/oder Hydroxylgruppen, insbesondere die Hydroxylgruppen, an der zu beschichtenden metallischen Oberfläche bzw. an der Oberfläche des mindestens einen partikulären Metalls können mit herkömmlichen im Stand der Technik bekannten Verfahren erzeugt werden. Beispielsweise können die metallischen Oberflächen mit Wasser oder Wasserdampf in Kontakt gebracht werden, so dass sich freie Hydroxylgruppen an deren Oberfläche ausbilden. Oxidgruppen umfassende Metalle können durch Exposition der Metalle mit Sauerstoff hergestellt werden, da Metalle üblicherweise in der Gegenwart von Sauerstoff dünne Oxidschichten auf ihren Oberflächen ausbilden.

Die plättchenförmigen nichtmetallischen Partikel, die ebenfalls Oxid- und/oder Hydroxylgruppen umfassen, weisen entweder aufgrund ihrer chemischen Zusammensetzung an der Oberfläche Oxid- und/oder Hydroxylgruppen auf oder diese werden durch chemische Reaktionen aufgebracht. Die evtl. zur Erzeugung der Oxid- und/oder Hydroxylgruppen nötigen chemischen Reaktionen sind abhängig vom eingesetzten Material und dementsprechend dem Fachmann hinreichend bekannt.

Korrosionsbeständige Beschichtungen, die aus dem Stand der Technik bekannt sind, weisen in der Regel um die 60% bis 90% partikuläres Metall (Zn, Al, Pb usw.), üblicherweise in Form von Pulver, Flakes oder Lamellen, auf. Diese relativ hohe Menge an partikulärem Metall soll ausreichend sein, um einen kathodischen Korrosionsschutz zu erreichen. Durch die Zugabe von plättchenförmigen nichtmetallischen Partikel kann die üblicherweise zugesetzte Menge an partikulärem Metall signifikant (bis zu 25%) reduziert werden.

Das erfindungsgemäße Beschichtungsmaterial umfasst mindestens ein Bindemittel. In einer bevorzugten Ausführungsform kann das Beschichtungsmaterial mindestens zwei, vorzugsweise mindestens drei, noch mehr bevorzugt mindestens vier, noch mehr bevorzugt mindestens fünf, verschiedene Bindemittel, vorzugsweise verschiedene Arten von Bindemitteln, umfassen.

Das erfindungsgemäße Beschichtungsmaterial umfasst zudem mindestens ein partikuläres Metall. In einer bevorzugten Ausführungsform kann das Beschichtungsmaterial auch mindestens zwei, vorzugsweise mindestens drei, noch mehr bevorzugt mindestens vier, noch mehr bevorzugt mindestens fünf, verschiedene partikuläre Metalle umfassen. Verschiedene partikuläre Metalle bedeutet, dass entweder einzelne Partikel aus einer einzigen Metallart (z.B. nur Zink, nur Aluminium) bestehen und das Beschichtungsmaterial solche Partikel bestehend aus verschiedenen Metallen umfasst. Verschiedene partikuläre Metalle bedeutet auch, dass einzelne Partikel mehrere Metallarten (d.h. Legierungen aus z.B. Zink und Aluminium) umfassen können.

Das erfindungsgemäße Beschichtungsmaterial umfasst zudem mindestens ein plättchenförmiges nichtmetallisches Partikel. In einer bevorzugten Ausführungsform kann das Beschichtungsmaterial auch mindestens zwei, vorzugsweise mindestens drei, noch mehr bevorzugt mindestens vier, noch mehr bevorzugt mindestens fünf, verschiedene plättchenförmige nichtmetallische Partikel umfassen.

"Bindemittel", wie hier verwendet, bezieht sich auf chemische Verbindungen, die in der Lage sind mindestens zwei feste Stoffe in einem Gemisch (z.B. Suspension) miteinander bzw. mindestens einen festes Stoffe mit einer Oberfläche kovalent zu verbinden.

"Bindemittel, das in der Lage ist eine kovalente Bindung mit Oxid- und/oder Hydroxylgruppen einzugehen", wie hier definiert, bezieht sich auf Bindemittel, die reaktive Gruppen aufweisen, die unter bekannten Reaktionsbedingungen eine kovalente Bindung mit Oxid- und/oder Hydroxylgruppen anderer Verbindungen und Substraten eingehen können.

"Partikuläres Metall", wie hier verwendet, sind Partikel aus einem Metall oder einer Metalllegierung. Die Partikel können unterschiedlichste Formen aufweisen, wobei die Partikel besonders bevorzugt die Form von Lamellen aufweisen.

"Plättchenförmige nichtmetallische Partikel", wie hier verwendet, sind Partikel mit einer Plättchenform. "Nichtmetallisch" umfasst im Sinne der vorliegenden Erfindung plättchenförmige Partikel, die keine, insbesondere auf metallischen Bindungen beruhende, metallische Eigenschaften (wie elektrische Leitfähigkeit, metallischer Glanz und Duktilität) aufweisen. Der Begriff "nichtmetallisch" schließt jedoch nicht aus, dass die plättchenförmigen nichtmetallischen Partikel Metallverbindungen, wie z.B. Metallsilikate, umfassen. Nichtmetallische Partikel können beispielhaft Polymerplättchen, Glasplättchen, rein metalloxidische Substrate, aber auch natürliche oder synthetische Plättchen aus Mineralien (z.B. Glimmer) sein.

Die Begriffe "Metall" und "metallisch", wie hier verwendet, umfassen neben Metallen als solche auch Legierungen von Metallen, welche beide reine metallische Bindungen aufweisen. Daher besteht die zu beschichtende Oberfläche bzw. das partikuläre Metall entweder aus einem Metall oder einer Metalllegierung.

Gemäß der vorliegenden Erfindung ist das mindestens eine Bindemittel ausgewählt aus der Gruppe bestehend aus Alkoxysilanen, Siloxanen, Alkyltitanaten, Titanaten, Alkylzirkonaten, Zirkonaten und Gemischen davon.

Erfindungsgemäß können im Beschichtungsmaterial verschiedenste Bindemittel eingesetzt werden, die in der Lage sind eine kovalente Bindung mit den Oxid- und/oder Hydroxylgruppen zumindest der metallischen Oberfläche, des partikulären Metalls und dem nichtmetallischen Partikel einzugehen. Besonders bevorzugt sind jedoch die oben genannten Gruppen von Bindemittel.

Insbesondere die monomeren Bestandteile des erfindungsgemäßen Beschichtungsmaterials wie Silane und Silikate, Titanate, Zirkonate, reagieren besonders gut mit den Hydroxylgruppen der metallischen Oberfläche bzw. des partikulären Metalls und werden andererseits bereits durch katalytische Mengen H₂O hydrolysiert und in der Folge in die Matrix eingebaut.

Gemäß einer weiteren bevorzugten Ausführungsform der vorliegenden Erfindung umfasst das Alkoxysilan die Formel (I) 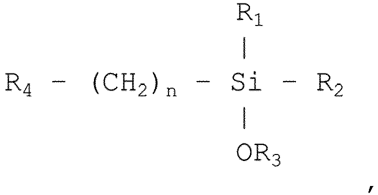 wobei R₁ und R₂ unabhängig voneinander ein Wasserstoffatom, ein Alkylrest, eine Phenylgruppe, eine primäre Aminogruppe, eine sekundäre Aminogruppe, eine Alkoxygruppe, eine Carboxyalkylgruppe, eine Epoxyalkylgruppe, eine Acryloxyalkylgruppe oder eine primäre oder sekundäre Aminoalkylgruppe, R₃ ein Wasserstoffatom oder ein Alkylrest und R₄ ein Wasserstoffatom, eine primäre Aminogruppe, eine sekundäre Aminogruppe, eine Alkoxygruppe, eine Carboxyalkylgruppe, eine Epoxyalkylgruppe, eine Acryloxyalkylgruppe, eine primäre oder sekundäre Aminoalkylgruppe, eine Vinylgruppe, eine Oxiranylgruppe, eine Acrylgruppe, eine Methacrylgruppe, eine Mercaptogruppe, eine Isocyanatogruppe oder eine Ureidogruppe darstellt und n eine ganze Zahl von 0 bis 15 ist. Da die eingesetzten Oligomere flüssig oder in geeigneten Lösungsmitteln zu flüssigen Zubereitungen formulierbar sein müssen, liegt n bei 15 oder darunter.

Gemäß einer besonders bevorzugten Ausführungsform der vorliegenden Erfindung umfasst das Siloxan die Formel (II)

(R₆)₃Si-[O-Si(R₅)₂]ₙ-O-Si(R₆)₃,

wobei R₅ und R₆ unabhängig voneinander ein Wasserstoffatom, eine Hydroxylgruppe, eine primäre Aminogruppe, eine sekundäre Aminogruppe, eine Alkoxygruppe, eine Carboxyalkylgruppe, eine Epoxyalkylgruppe, eine Acryloxyalkylgruppe, eine primäre oder sekundäre Aminoalkylgruppe, ein Alkylrest, oder ein Phenylrest darstellen und n eine ganze Zahl zwischen 1 und 25, vorzugsweise zwischen 1 und 20, noch mehr bevorzugt zwischen 1 und 15, ist.

Gemäß einer weiteren bevorzugten Ausführungsform der vorliegenden Erfindung umfasst das Alkyltitanat die Formel (III)

Ti(OR₇)₄,

wobei R₇ ein Alkylrest ist.

Gemäß einer bevorzugten Ausführungsform der vorliegenden Erfindung umfasst das Titanat die Formel (IV)

(R₉)₃Ti-[O-Ti(R₈)₂]ₙ-O-Ti(R₉)₃,

wobei R₈ und R₉ unabhängig voneinander ein Wasserstoffatom, eine Hydroxylgruppe, eine Alkoxygruppe, ein Alkylrest, oder ein Phenylrest darstellt und n eine ganze Zahl zwischen 1 und 25, vorzugsweise zwischen 1 und 20, noch mehr bevorzugt zwischen 1 und 15, ist.

Gemäß einer besonders bevorzugten Ausführungsform der vorliegenden Erfindung umfasst das Alkylzirkonat die Formel (V) Zr(OR₁₀)₄, wobei R₁₀ ein Alkylrest ist.

Gemäß einer weiteren bevorzugten Ausführungsform der vorliegenden Erfindung umfasst das Zirkonat die Formel (VI)

(R₁₂)₃Zr-[O-Zr(R₁₁)₂]ₙ-O-Zr(R₁₂)₃,

wobei R₁₁ und R₁₂ unabhängig voneinander ein Wasserstoffatom, eine Hydroxylgruppe, eine Alkoxygruppe, ein Alkylrest, oder ein Phenylrest darstellt und n eine ganze Zahl zwischen 1 und 25, vorzugsweise zwischen 1 und 20, noch mehr bevorzugt zwischen 1 und 15, ist.

Erfindungsgemäß kann der Alkylrest des Alkoxysilans, des Siloxans, des Alkyltitanats, des Titanats, des Alkylzirkonats und/oder des Zirkonats ein substituierter oder nichtsubstituierter C₁ bis C₁₅, vorzugsweise ein C₁ bis C₁₀, noch mehr bevorzugt ein C₁ bis C₅, noch mehr bevorzugt ein C₁ bis C₄, linearer oder verzweigter Alkylrest sein.

Gemäß einer weiteren bevorzugten Ausführungsform der vorliegenden Erfindung ist das mindestens eine Bindemittel ausgewählt aus der Gruppe bestehend aus Dicarboxyalkylpolysiloxan, Diepoxyalkylpolysiloxan, Dihydroxyalkylpolysiloxan, Diacryloxyalkylpolysiloxan, organofunktionelles Siloxan umfassend sekundäre Aminoendgruppen, Silikonepoxidharz, Silizium-modifiziertes Epoxidharz, hydroxyfunktioneller Silkonpolyester, methoxyfunktionelles Methylpolysiloxanharz, methoxyfunktionelles Methylphenylpolysiloxanharz, silanolterminiertes Polydimethylsiloxan (=Hydroxyterminiertes PDMS), alkoxyterminiertes PDMS, Tetraethyltitanat, Tetra-n-propyltitanat, Tetraisopropyltitanat, Tetra-n-butyltitanat, Isopropylbutyltitanat, Tetraisobutyltitanat, Tetra-tert.-butyltitanat, Polybutyltitanat, Tetra(2-ethylhexyl)titanat, Tetra-n-octyltitanat, Cresyltitanat monomer, Cresyltitanat polymer, Tetra-n-propylzirkonat und Tetra-n-butylzirkonat.

Das Standardpotential des mindestens einen partikulären Metalls beträgt weniger als -0,04 V, bevorzugt weniger als -0,4 V, noch mehr bevorzugt weniger als -0,41 V, noch mehr bevorzugt weniger als -0,44 V.

Damit das mindestens eine partikuläre Metall als Opferanode dient, um die zu beschichtende metallische Oberfläche zu schützen, muss dieses ein geringeres elektrochemisches Potential bzw. geringeres Standardpotential aufweisen als das Metall der metallischen Oberfläche. Da viele zu beschichtende Oberflächen (z.B. Schrauben, Konstruktionsteile für Maschinen und Gebäude, usw.) Eisen bzw. Eisenprodukte (wie z.B. Stahl, Edelstahl, Eisenlegierungen) umfassen, sodass Eisen eines der am häufigsten eingesetzte Metalle ist, beträgt das Standardpotential des mindestens einen partikulären Metalls weniger als -0,04 V, noch mehr bevorzugt weniger als -0,4 V, noch mehr bevorzugt weniger als -0,41 V, noch mehr bevorzugt weniger als -0,44 V.

Gemäß einer besonders bevorzugten Ausführungsform der vorliegenden Erfindung umfasst das mindestens eine partikuläre Metall Zink, Aluminium, Magnesium, Mangan, Zinn, Blei, Nickel und Legierungen davon.

Das mindestens eine partikuläre Metall umfasst bzw. besteht vorzugsweise aus einem einzigen Metall (z.B. Zink, Aluminium) oder aus einer Legierung (z.B. Zink/Aluminium). Metalle wie Magnesium werden vorzugsweise in Legierungen eingesetzt, wobei Metalle wie Zink oder Aluminium durchaus einzeln verwendet werden können.

Gemäß einer weiteren bevorzugten Ausführungsform der vorliegenden Erfindung ist das mindestens eine partikuläre Metall in Form von Partikeln, Plättchen und/oder Lamellen in dem mindestens einen Beschichtungsmaterial vorhanden.

Das mindestens eine partikuläre Metall kann unterschiedlichste Formen aufweisen, wobei es bevorzugt ist, dass das partikuläre Metall eine abgeflachte Form wie Plättchen oder Lamellen aufweist. Eine Plättchen- bzw. Lamellenform hat den Vorteil, dass sich innerhalb des Beschichtungsmaterials eine Schichtstruktur ausbildet, bei der die einzelnen Lagen des partikulären Metalls mit dem Bindemittel kovalent verbunden wird. Dazwischen können sich die plättchenförmigen nichtmetallischen Partikel einlagern. Durch diese überlagernden "Schichten" kann u.a. die Korrosionsbeständigkeit des Beschichtungsmaterials signifikant verbessert werden, da der Weg für etwaig eintretendes Wasser durch das Beschichtungsmaterial verlängert wird. Zudem hat sich gezeigt, dass durch eine derartige Form des partikulären Metalls die Haftfestigkeit und mechanische Stabilität des Beschichtungsmaterials verbessert wird.

Mikroskopische Untersuchungen haben gezeigt, dass das partikuläre Metall eine überraschend homogene geometrische Struktur, eine Art "Dachziegelarchitektur", ausbildet. Allfällige Fehlstellen werden durch die ebenfalls plättchenförmigen, jedoch deutlich kleineren, nichtmetallischen Partikel gefüllt und schließlich durch das Bindemittel "verkittet".

Eine Plättchen- bzw. Lamellenform ist durch das Verhältnis der mittleren lateralen Ausdehnung, zur mittleren Höhe des partikulären Metalls definiert. Dabei kann die mittlere Höhe des partikulären Metalls um mindestens 50%, vorzugsweise mindestens 75%, geringer sein als die mittlere laterale Ausdehnung. Die Gestalt und Abmessungen der Partikel können beispielsweise elektronenmikroskopisch bestimmt werden.

Gemäß einer bevorzugten Ausführungsform der vorliegenden Erfindung weist das mindestens eine partikuläre Metall eine mittlere Partikelgröße (D50) von 4 bis 20 µm, vorzugsweise von 5 bis 20 µm, noch mehr bevorzugt von 5 bis 15 µm, auf.

Es hat sich erfindungsgemäß ergeben, dass das Beschichtungsmaterial besonders gute Hafteigenschaften aufweist, wenn die mittlere Partikelgröße 4 bis 20 µm beträgt.

Die mittlere Partikelgröße (D50) (d.h. 50% der Partikel weisen eine bestimmte Größenordnung auf), kann mit Hilfe verschiedenster Verfahren bestimmt werden. Für Partikel mit einer Größe von 20 µm und mehr eignen sich z.B. Verfahren unter Benutzung von einem oder mehreren Sieben. Für Partikel mit einer Größe von weniger als 20 µm können vorzugsweise Partikelgrößenmessungen mittels Laserbeugung, Lichtstreuung und/oder Sedimentation durchgeführt werden.

Partikel mit dieser Größenverteilung können beispielsweise durch geeignete Siebseparierungen oder andere Sichtverfahren hergestellt werden.

Diese Abmessungen beziehen sich vorzugsweise auf die am weitesten entfernten Punkte des partikulären Metalls.

Gemäß einer weiteren bevorzugten Ausführungsform der vorliegenden Erfindung umfasst die metallische Oberfläche Eisen und/oder Eisenlegierungen.

Die metallische Oberfläche auf die das erfindungsgemäße Beschichtungsmaterial als Korrosionsschutz aufgebracht werden kann, kann im Prinzip jedes von Korrosion gefährdetes Metall sein. Besonders bevorzugt sind jene Metalle, die einer erhöhten Korrosion ausgesetzt sind. Daher umfasst die zu beschichtende metallische Oberfläche vorzugsweise Eisen und/oder Eisenlegierungen wie Stahl (eine Eisen-Kohlenstoff-Legierung). In einem solchen Fall umfasst bzw. besteht das partikuläre Metall vorzugsweise aus Zink, Aluminium und/oder einer Zink/AluminiumLegierung. Selbstverständlich können mit dem erfindungsgemäßen Beschichtungsmaterial auch metallische Oberflächen umfassend Aluminium korrosionsbeständig beschichtet werden.

Gemäß einer bevorzugten Ausführungsform der vorliegenden Erfindung umfasst das mindestens eine Beschichtungsmaterial mindestens einen Polysaccharid-Ester mit einem Acylierungsgrad von weniger als 3.

Es hat sich überraschend gezeigt, dass sowohl die Haftung des Beschichtungsmaterials an die metallische Oberfläche als auch dessen mechanische Eigenschaften und dessen Bindefähigkeit zu einer etwaigen Deckschicht signifikant verbessert wird, wenn in dem Beschichtungsmaterial mindestens ein Polysaccharid-Ester vorgesehen ist. Der mindestens eine Polysaccharid-Ester weist dabei einen Acylierungsgrad von unter 3 auf, um sicherzustellen, dass genügend freie Hydroxylgruppen vorhanden sind. Diese freien Hydroxylgruppen werden benötigt, um eine kovalente Bindung zwischen dem mindestens einen Polysaccharid-Ester und den weiteren Oxid- und/oder Hydroxylgruppen-haltigen Komponenten des erfindungsgemäßen Beschichtungsmaterial bzw. der metallischen Oberfläche und der etwaigen Deckschicht herzustellen.

Das erfindungsgemäße Beschichtungsmaterial kann mindestens einen, vorzugsweise mindestens zwei, noch mehr bevorzugt einen bis drei, am meisten bevorzugt einen, verschiedene Polysaccharid-Ester, vorzugsweise verschiedene Arten von Polysaccharid-Estern umfassen.

Unter dem Begriff "Acylierungsgrad", wie hier verwendet, ist die mittlere Anzahl der Acylgruppen pro Struktureinheit zu verstehen. In einer bevorzugten Ausführungsform der vorliegenden Erfindung weist der Polysaccharid-Ester einen Acylierungsgrad im Bereich von 2,0 bis 2,97, vorzugsweise von 2,5 bis 2,97, noch mehr bevorzugt von 2,8 bis 2,9, auf.

Der Acylierungsgrad ergibt sich aus folgender Überlegung: Cellulose ist ein Polymer aus Glukosemolekülen. Eine Monomereinheit (Glucose) verfügt über 3 Hydroxylgruppen, die acylierungsfähig sind. Um eine vernetzende kovalente Einbindung in die Polymermatrix zu sichern, sind einige Hydroxylgruppen pro Molekül freizuhalten. Ein Acylierungsgrad von 2,97 bedeutet, dass pro 100 Monomereinheiten 3 Hydroxylgruppen zur Vernetzung zur Verfügung stehen. Der Acylierungsgrad kann dadurch gesteuert werden, in dem bei der Acylierung eines Polysaccharids die stöchiometrischen Verhältnisse von Polysaccharid zu Acylierungsreagenz entsprechend variiert wird. D.h. es werden im Verhältnis zu den vorhandenen freien acylierungsfähigen Hydroxylgruppen am Polysaccharid weniger Moleküle des Acylierungsreagenz zugesetzt.

Der mindestens eine Polysaccharid-Ester ist vorzugsweise ein Cellulose-Ester oder ein Stärke-Ester.

Gemäß einer weiteren bevorzugten Ausführungsform der vorliegenden Erfindung ist der Cellulose-Ester ausgewählt aus der Gruppe bestehend aus Celluloseacetat, Cellulosepropionat, Celluloseacetobutyrat, Celluloseacetopropionat, Cellulosebutyrat und Gemischen davon, wobei Celluloseacetobutyrat besonders bevorzugt wird.

Gemäß einer besonders bevorzugten Ausführungsform der vorliegenden Erfindung umfasst das mindestens eine Beschichtungsmaterial 0,1 bis 5 Gew%, vorzugsweise 0,1 bis 3 Gew%, noch mehr bevorzugt 0,2 bis 2 Gew%, des mindestens einen Polysaccharid-Esters.

"Gew%" bzw. "Gewichtsprozent", wie hier verwendet, gibt die Masse einer oder mehrerer Komponenten im Verhältnis zur Gesamtmasse des Beschichtungsmaterials an. Somit bedeuten 5 Gew% einer spezifischen Komponente, beispielsweise, dass 100 g Beschichtungsmaterial 5 g dieser spezifischen Komponente umfassen.

Gemäß einer bevorzugten Ausführungsform der vorliegenden Erfindung umfasst das Beschichtungsmaterial 2 bis 30 Gew%, vorzugsweise 5 bis 25 Gew%, mindestens eines plättchenförmigen nichtmetallischen Partikels.

Es hat sich erfindungsgemäß gezeigt, dass es besonders vorteilhaft ist, im Beschichtungsmaterial 2 bis 30 Gew% mindestens eines plättchenförmigen nichtmetallischen Partikels vorzusehen. Bei Zugabe dieser Menge an plättchenförmigen nichtmetallischen Partikeln weist das Beschichtungsmaterial besondere Haftfestigkeit auf.

Gemäß einer weiteren bevorzugten Ausführungsform der vorliegenden Erfindung weist das mindestens eine plättchenförmige nichtmetallische Partikel eine mittlere Größe (D50) von 1 nm bis 20 µm, vorzugsweise von 2 nm bis 20 µm, noch mehr bevorzugt von 5 nm bis 15 µm, auf. Die mittlere Größe des mindestens einen plättchenförmigen nichtmetallischen Partikels wird wie die mittlere Partikelgröße - wie oben beschrieben - bestimmt.

Die Zugabe von plättchenförmigen nichtmetallischen Partikeln mit dieser Größenverteilung führt zu einer noch mehr verbesserten Haftfestigkeit des erfindungsgemäßen Beschichtungsmaterials auf metallischen Oberflächen.

Das Beschichtungsmaterial umfasst vorzugsweise 2 bis 30 Gew%, vorzugsweise 5 bis 25 Gew%, mindestens eines plättchenförmigen nichtmetallischen Partikels.

Gemäß einer besonders bevorzugten Ausführungsform der vorliegenden Erfindung weist das Beschichtungsmaterial mindestens ein plättchenförmiges nichtmetallisches Partikel A, welches eine mittlere Größe (D50) von 4 bis 20 µm, vorzugsweise von 5 bis 20 µm, noch mehr bevorzugt von 5 bis 15 µm, aufweist, und mindestens ein plättchenförmiges nichtmetallisches Partikel B, welches eine mittlere Größe (D50) von weniger als 2 µm, vorzugsweise von weniger als 1,5 µm, noch mehr bevorzugt von weniger als 1 µm, auf.

Es hat sich überraschenderweise gezeigt, dass die Verwendung von Gruppen plättchenförmiger nichtmetallischer Partikel mit einer unterschiedlichen Größenverteilung zu einer korrosionsbeständigen Beschichtung führt, die sich durch besonders gute Hafteigenschaften auszeichnet. Die Gruppen plättchenförmiger nichtmetallischer Partikel können entweder aus demselben oder aus unterschiedlichen Materialien bestehen bzw. diese umfassen.

Gemäß einer bevorzugten Ausführungsform der vorliegenden Erfindung ist das mindestens eine plättchenförmige nichtmetallische Partikel, vorzugsweise das plättchenförmige nichtmetallische Partikel A und/oder B, ein natürliches oder synthetisches, gegebenenfalls modifiziertes, Schichtsilikat.

Schichtsilikate erwiesen sich aufgrund der plättchenförmigen Struktur und aufgrund der auf der Oberfläche vorhandenen freien Hydroxylgruppen als besonders geeignet für den erfindungsgemäßen Zweck.

Gemäß einer besonders bevorzugten Ausführungsform der vorliegenden Erfindung ist das mindestens eine plättchenförmige nichtmetallische Partikel A ein Schichtsilikat der GlimmerGruppe und/oder der Talk-Pyrophyllit-Gruppe, vorzugsweise ausgewählt aus der Gruppe bestehend aus Muskovit, Phlogopit, Biotit und Talk, wobei Mikroglimmer wie z.B. Muskovit besonders bevorzugt ist. Ein weiterer Vorteil von Schichtsilikaten der GlimmerGruppe ist die Tatsache, dass diese für Glimmer typische Oberflächeneffekte erzeugen ("glitzern"), der den oftmals gewünschten "Metalliceffekt" optisch unterstützt und verstärkt.

Das mindestens eine plättchenförmige nichtmetallische Partikel B ist vorzugsweise ein Schichtsilikat der Tonmineral-Gruppe, vorzugsweise ausgewählt aus der Gruppe bestehend aus Montmorillonit, Bentonit, Hektorit, Beidellit, Nontronit, Saponit und Kaolinit, wobei Montmorillonit und Bentonit, das eine Mischung aus verschiedenen Tonmineralien ist und als wichtigsten Bestandteil Montmorillonit (60% bis 80 %) enthält, besonders bevorzugt im erfindungsgemäßen Beschichtungsmaterial vorgesehen ist.

Gemäß einer weiteren bevorzugten Ausführungsform der vorliegenden Erfindung umfasst das Beschichtungsmaterial mindestens ein plättchenförmiges nichtmetallisches Partikel A und mindestens ein plättchenförmiges nichtmetallisches Partikel B in einem Gewichtsverhältnis von 10:0,01 bis 10:5, vorzugsweise von 10:0,05 bis 10:2, noch mehr bevorzugt von 10:0, 1 bis 10:1.

Es hat sich gezeigt, dass ein Beschichtungsmaterial umfassend plättchenförmige nichtmetallische Partikel A und B in einem bestimmten Verhältnis zueinander besonders vorteilhaft für dessen Haftfestigkeit an der metallischen Oberfläche ist. Durch die unterschiedliche Größenverteilung der Partikel können die Zwischenräume zwischen dem partikulären Metall vollständiger ausgefüllt werden. Dadurch stehen für die kovalente Bindung zwischen den einzelnen Komponenten des erfindungsgemäßen Beschichtungsmaterials mehr reaktive Oxid- und Hydroxylgruppen zur Verfügung.

Das erfindungsgemäße Beschichtungsmaterial kann selbstverständlich weitere Komponenten umfassen, die üblicherweise bei der Herstellung solcher Materialien eingesetzt werden. So kann das Beschichtungsmaterial beispielsweise Lösungsmittel und/oder Rheologieadditive umfassen, die dazu dienen die Viskosität entsprechend der Art der Verwendung einzustellen.

Gemäß einer besonders bevorzugten Ausführungsform der vorliegenden Erfindung umfasst das erfindungsgemäße Beschichtungsmaterial Microglimmer (z.B. Muskovit KAl₂ [(OH, F)₂| AlSi₃O₁₀] oder andere Mineralien der Glimmergruppe) und Montmorillonit (Bentonit) Al_{1,67}Mg_{0,33}[(OH)₂Si₄O₁₀] .Na_{0,3}. (H₂O)₄ beide in einem Verhältnis von MC:B=10:0,1 bis 10:1. Dadurch wird der kathodische Korrosionsschutz und die Haftung an der Metalloberfläche deutlich verbessert. Dies wird durch die Reaktionsfähigkeit der Hydroxylgruppen in den Mineralien mit den monomeren Bindemittelbestandteilen erklärt. Wie bereits zuvor erwähnt, ist es von besonderem Vorteil, wenn Bentonit in einer Partikelgröße von 5 bis 100 nm und Mikroglimmer in etwa gleicher Größenordnung wie das partikuläre Metall eingesetzt wird.

Ein weiterer Aspekt der vorliegenden Erfindung betrifft ein Verfahren zur Herstellung einer korrosionsbeständigen Beschichtung auf einer metallischen Oberfläche umfassend den Schritt des Aufbringens mindestens eines erfindungsgemäßen Beschichtungsmaterials auf die metallische Oberfläche.

Das erfindungsgemäße Beschichtungsmaterial kann auf unterschiedlichste Art auf eine metallische Oberfläche aufgebracht werden. Beispielweise kann das Beschichtungsmaterial durch ein Sprühverfahren, ein Tauchverfahren oder durch bloßes Auftragen mittels Rollen oder Pinsel auf eine metallische Oberfläche aufgebracht werden.

Die Schichtdicke des auf die metallische Oberfläche aufgetragenen Beschichtungsmaterials beträgt vorzugsweise 5 bis 50 µm, noch mehr bevorzugt 5 bis 40 µm, noch mehr bevorzugt 5 bis 30 µm, noch mehr bevorzugt 5 bis 20 µm.

Gemäß einer bevorzugten Ausführungsform der vorliegenden Erfindung umfasst die metallische Oberfläche Eisen und/oder Eisenlegierungen.

Das erfindungsgemäße Beschichtungsmaterial ist besonders zur Beschichtung von Oberflächen geeignet, die Eisen und/oder Eisenlegierungen, wie z.B. Stahl, umfassen bzw. daraus bestehen.

Gemäß einer weiteren bevorzugten Ausführungsform der vorliegenden Erfindung wird die metallische Oberfläche vor dem Aufbringen des mindestens einen Beschichtungsmaterials aufgeraut, vorzugsweise mittels Sandstrahlen.

Um die zu beschichtende metallische Oberfläche für die kovalente Anbindung des Beschichtungsmaterials bzw. Teilen davon zu verbessern, wird diese vor dem Aufbringen des Beschichtungsmaterials vorbehandelt bzw. aufgeraut. Dadurch wird einerseits eine möglicherweise bereits vorhandene Korrosionsschicht abgetragen, andererseits können sich an der Oberfläche Strukturen im Nano- und Mikrobereich ausbilden, wodurch das Ausbilden von Oxid- und/oder Hydroxylgruppen an der metallischen Oberfläche gefördert wird. Zudem kann die Haftfestigkeit des Beschichtungsmaterials nochmals verbessert werden.

Sandstrahlen kann erfindungsgemäß mit Sand (z.B. Granatsand, Quarzsand), Korund, Glasperlen, Stahlkies, Keramik, Kunststoff usw. durchgeführt werden. Alternativ zum Sandstrahlen kann die metallische Oberfläche auch mit "ultra-high pressure abrasive blasting", Sodastrahlen und Trockeneisstrahlen vorbehandelt werden.

Vorzugsweise weist die metallische Oberfläche nach der Vorbehandlung einen Mittenrauwert (Ra) von 2 bis 30 µm, vorzugsweise von 2 bis 20 µm, noch mehr bevorzugt von 2 bis 10 µm, und eine gemittelte Rautiefe (Rz) von 10 bis 200 µm, vorzugsweise von 10 bis 150 µm, noch mehr bevorzugt von 10 bis 100 µm, noch mehr bevorzugt von 10 bis 50 µm, auf.

Gemäß einer besonders bevorzugten Ausführungsform der vorliegenden Erfindung wird die metallische Oberfläche vor dem Aufbringen bei mindestens 15°C, vorzugsweise bei mindestens 20°C, und bei mindestens 20%, vorzugsweise bei mindestens 30%, relativer Luftfeuchtigkeit für mindestens 2 Minuten, vorzugsweise mindestens 5 Minuten, vorbehandelt. Durch das in Kontakt bringen der optional vorbehandelten metallischen Oberfläche mit Wasser und Sauerstoff werden die für die kovalente Anbindung des Beschichtungsmaterials bzw. Teilen davon benötigten Oxid- und/oder Hydroxylgruppen an der Oberfläche erzeugt. Es hat sich gezeigt, dass sich auf frisch gestrahlten metallischen Oberflächen, insbesondere Eisen-haltigen Oberflächen (z.B. Stahloberflächen), bereits innerhalb kurzer Zeit eine messbare Schicht von Metalloxiden und Metallhydroxiden (FeO, Fe (OH)2, FeO(OH) usw.) in einer Schichtdicke im Nanometerbereich (1 bis 200 nm, vorzugsweise 1 bis 100 nm, noch mehr bevorzugt 1 bis 50 nm) entwickelt, wenn in natürlicher Luftatmosphäre mit zumindest 20% relativer Feuchtigkeit bei einer Mindesttemperatur von 15°C gearbeitet wird. Bei erhöhter Temperatur und/oder erhöhter relativer Feuchtigkeit ist der Prozess deutlich schneller und die Schichtdicke kann rasch ein Mehrfaches erreichen.

Die Schicht von Metalloxiden und Metallhydroxiden an der metallischen Oberfläche beträgt vor dem Auftragen des erfindungsgemäßen Beschichtungsmaterials 1 bis 1000 nm, vorzugsweise 1 bis 500 nm, noch mehr bevorzugt 1 bis 200 nm, noch mehr bevorzugt 1 bis 150 nm, noch mehr bevorzugt 1 bis 100 nm. Ab einer bestimmten Schichtdicke besteht die Gefahr, dass das Beschichtungsmaterial nach dem Auftragen und Trocknen abblättert, da die darunterliegende Schicht aus Metalloxiden und Metallhydroxiden eine zu geringe Haftung an der metallischen Oberfläche aufweist.

Vorzugsweise wird die metallische Oberfläche nach dem Aufbringen des mindestens einen Beschichtungsmaterials getrocknet, vorzugsweise bei einer Temperatur von 20 bis 300°C, noch mehr bevorzugt bei 20 bis 250°C, am meisten bevorzugt bei 20 bis 200°C.

Dieser Vorgang läuft vorzugsweise bei Raumtemperatur ab, kann aber mittels Temperaturerhöhung stark beschleunigt werden. Dennoch bleiben kleine Reste von niedermolekularen, damit in der Matrix beweglichen und reaktiven, Oligomeren erhalten. Diese oligomeren Anteile wiederum können sowohl als Reaktionspartner als auch als Katalysatoren im Reaktionsmechanismus einer etwaige nachträglich aufgebrachten Deckschicht, verwendet werden.

Gemäß einer besonders bevorzugten Ausführungsform der vorliegenden Erfindung wird nach dem Aufbringen des mindestens einen Beschichtungsmaterials oder nach dem Trocknen eine Deckschicht auf das Beschichtungsmaterial aufgebracht, die mindestens ein Bindemittel umfasst, das in der Lage ist eine kovalente Bindung mit einem oder mehreren Bestandteilen des Beschichtungsmaterials auszubilden.

In vielen Fällen ist es erwünscht, auf eine korrosionsbeständige Grundschicht eine Deckschicht aufzubringen. Erfindungsgemäß werden dabei die freien reaktiven Gruppen des Beschichtungsmaterials genutzt, um die Deckschicht kovalent an das Beschichtungsmaterial zu binden. Durch eine kovalente Bindung wird die Beständigkeit der Deckschicht signifikant erhöht.

Gemäß einer besonders bevorzugten Ausführungsform der vorliegenden Erfindung umfasst die Deckschicht mindestens ein siliziummodifiziertes Epoxidharz und/oder mindestens ein siliziummodifiziertes Polyesterharz.

Gemäß einer bevorzugten Ausführungsform der vorliegenden Erfindung umfasst die Deckschicht mindestens ein Methacrylat-Copolymer und mindestens ein Alkoxysilan.

Gemäß einer weiteren bevorzugten Ausführungsform der vorliegenden Erfindung ist das Methacrylat-Copolymer ein AlkylMethacrylat-Copolymer, vorzugsweise ein Methyl-/Butyl-Methacrylat-Copolymer mit einem Verhältnis von MethylMethacrylat zu Butyl-Methacrylat von 0,5:5 bis 5:0,5, vorzugsweise von 1:4 bis 4:1, noch mehr bevorzugt von 1:2 bis 2:1, insbesondere von 1:1.

Die Deckschicht umfasst mindestens ein siliziummodifiziertes Epoxidharz und/oder mindestens ein siliziummodifiziertes Polyesterharz und mindestens ein Methacrylat-Copolymer in einem Verhältnis von 15:0,1 bis 15:10 (Harz:Copolymer), vorzugsweise von 10:0,5 bis 10:5, noch mehr bevorzugt von 10:1 bis 10:2.

Gemäß einer besonders bevorzugten Ausführungsform der vorliegenden Erfindung umfasst die Deckschicht mindestens ein Alkoxysilan, vorzugsweise ausgewählt aus der Gruppe bestehend aus Bis(3-triethoxysilylpropyl)amin, Bis(3-trimethoxysilylpropyl)amin, 3-Aminopropylmethyldiethoxysilan, 3-Aminopropyltriethoxysilan, 3-Aminopropyltrimethoxysilan, triaminofunktionelles Propyltrimethoxysilan, 2-Aminoethyl-3-aminopropylmethyldimethoxysilan, 2-Aminoethyl-3-aminopropyltrimethoxysilan und 3-Mercaptopropyltrimethoxysilan.

Gemäß einer bevorzugten Ausführungsform der vorliegenden Erfindung umfasst die Deckschicht mindestens einen Katalysator, vorzugsweise ausgewählt aus der Gruppe der Dialkyl-Zinn-dicarboxylate, vorzugsweise Dioctylzinndi(2-hexylhexanoat), Dioctylzinndithioglycolat, Dioctylzinndilaurat (DOTL), Dioctylzinnoxid, Dibutylzinndilaurat (DBTL), Monobutylzinntris-(2-ethylhexanoat), Dioctylzinndiketanoat, Dibutylzinndiketanoat, Dioctylzinndiacetat (DOTA), Dioctylzinnoxid (DOTO), Dibutylzinndiacetat (DBTA), Dibutylzinnoxid (DBTO), Dibutylzinnoxid, spezial (DBTO), Monobutylzinndihydroxychlorid, Monobutylzinnoxid (MBTO), Dioctylzinn dicarboxylat, Dioctylzinncarboxylat, Dioctylzinn-Weichmacher-Komplexe oder Dioctylzinn-Silan-Komplexe.

Die Deckschicht wird nach dem Auftragen getrocknet. Der Trocknungsprozess kann bei Raumklima erfolgen, jedoch kann durch Erhöhung der Temperatur der Trocknungsprozess beschleunigt werden. Die erfindungsgemäße Deckschicht wird vorzugsweise bei 20°C bis 150°C, noch mehr bevorzugt bei 30°C bis 100°C, noch mehr bevorzugt bei 40°C bis 80°C, getrocknet. Die Trocknungszeit beträgt vorzugsweise 5 bis 90 min, noch mehr bevorzugt 10 bis 75 min, noch mehr bevorzugt 15 bis 60 min, noch mehr bevorzugt 20 bis 40 min. Der Trocknungsprozess, bei dem es gleichzeitig auch zur Vernetzung der reaktiven Gruppen (z.B. reagieren Epoxidgruppen mit Aminen und/oder mit Silanolen) kommt, kann durch die Zugabe von geeigneten Katalysatoren zusätzlich beschleunigt werden. Katalysatoren können in einer Menge von 0,1 bis 5 Gew%, vorzugsweise von 0,2 bis 4%, noch mehr bevorzugt von 0,5 bis 3%, der Deckschichtzusammensetzung beigegeben werden.

An sich würde sich anbieten, das gleiche Bindemittelsystem wie in der Grundschicht für die Deckschicht zu verwenden (dies entspricht dem Stand der Technik), doch wird erfindungsgemäß ein alternatives Bindemittelsystem vorgeschlagen, das überraschenderweise dazu führt, dass die Haftung und mechanische Beständigkeit der Deckschicht und somit auch der Grundschicht (gebildet durch das erfindungsgemäße Beschichtungsmaterial) signifikant erhöht werden kann.

Es wurde gefunden, dass auf einer erfindungsgemäßen Grundschicht, die siloxan-, titanat- oder zirkonatbasiert sein kann, eine Deckschicht mit mindestens einem siliziummodifizierten Epoxidharz und/oder mindestens einem siliziummodifizierten Polyesterharz besonders gut bindet. Vor allem auch die Kombination mehrerer Silikonepoxidharze (z.B. Silikopon/Silikoftal der Fa. EVONIK oder Analogprodukte anderer Hersteller) und einem semielastischen Methyl-/Butyl-methacrylat-copolymer mit einem M/B Verhältnis 1:4 bis 4:1, bevorzugt 1:2 - 4:2, besonders bevorzugt 1:1 in einem Harzverhältnis von Silikonepoxid zu Acrylat von 10 zu 0,5 bis 5, bevorzugt von 10 zu 1 bis 2, zeigt besonders überraschend gute Ergebnisse hinsichtlich Haftung und mechanischer Beständigkeit.

Die Deckschicht kann neben den bereits erwähnten Bestandteilen färbige Pigmente, Gleitmittel und/oder weitere funktionelle Additive umfassen.

Ein weiterer Aspekt der vorliegenden Erfindung betrifft eine korrosionsbeständige Beschichtung auf einer metallischen Oberfläche herstellbar nach einem Verfahren gemäß der vorliegenden Erfindung.

Ein noch weiterer Aspekt der vorliegenden Erfindung betrifft einen Gegenstand mit einer zumindest teilweisen metallischen Oberfläche umfassend eine korrosionsbeständige Beschichtung gemäß der vorliegenden Erfindung oder herstellbar nach einem Verfahren gemäß der vorliegenden Erfindung.

Mit dem erfindungsgemäßen Beschichtungsmaterial, mit der erfindungsgemäßen Deckschicht und mit den erfindungsgemäßen Verfahren können Gegenstände sämtlicher Art, die eine metallische Oberfläche aufweisen, korrosionsbeständig beschichtet werden. Je nach Art des zu beschichtenden Gegenstandes werden geeignete Aufbringverfahren eingesetzt, die jenen aus dem Stand der Technik entsprechen.

Ein weiterer Aspekt der vorliegenden Erfindung betrifft die Verwendung eines Beschichtungsmaterials gemäß der vorliegenden Erfindung zur Herstellung einer korrosionsbeständigen Beschichtung auf einer metallischen Oberfläche.

Die vorliegende Erfindung wird anhand der folgenden Beispiele eingehender illustriert, ohne jedoch auf diese beschränkt zu sein.

### BEISPIELE:

### Beispiel 1: Formulierung I

Ein erfindungsgemäßes Beschichtungsmaterial wies die folgende Zusammensetzung auf:

| | |
|---|---|
| 10 Gew % | Poly-butyltitanat |
| 13 Gew % | Tetra-n-butyltitanat |
| 4 Gew % | Tetra-n-octyltitanat |
| 4 Gew % | Vinyltrimethoxysilan |
| 2,2 Gew % | CAB (Cellulose Acetate Butyrate) (A:B = 1:2, Acylierung 2,9) 10% in Methoxypropanol |
| 34 Gew % | Zinklamellen (90% in Naphtha stabilisiert) |
| 8 Gew % | Alulamellen (70 % in Naphtha stabilisiert) |
| 8,5 Gew % | Microglimmer (Muskovit) 10-14 µm |
| 3 Gew % | Bentonitdispersion (10%) in Xylol (→Muskovit : Bentonit = 10 : 0,35) |
| 2,9 Gew % | Rheologieadditive |
| 10,4 Gew % | Lösungsmittel (Testbenzin:Solvesso 1:1) |
| 100 Gew % | |

Dieses Beschichtungsmaterial enthielt ca. 60% Festkörper (bestimmt bei 180°C, 30 min), bzw. 45% Pigment, davon 8,8% (= 19,6% d. Pigmente) Schichtsilikate (bei einem Verhältnis MC:B = 10 : 0,35) .

Das Gemisch wurde nach Spritzauftrag auf eine metallische Oberfläche für 45 min bei 190°C bis 250°C eingebrannt und konnte sodann mit Klarlack lt. Beispiel 3 beschichtet werden.

### Beispiel 2: Formulierung II

Ein erfindungsgemäßes Beschichtungsmaterial wies die folgende Zusammensetzung auf:

| | |
|---|---|
| 32 Gew % | Tetra-n-butyltitanat |
| 3 Gew % | Polybutyltitanat |
| 3 Gew % | Acryloxytrimethylen-trimethoxy-silan |
| 3 Gew % | CAB (A : B = 1 : 2, Acylierung 2,9) 10% in Methoxypropanol |
| 35 Gew % | Zinklamellen (90% in Naphtha) |
| 6 Gew % | Alulamellen (70 % in Naphtha) |
| 6 Gew % | Microglimmer (Muskovit) 8-10 µm |
| 4 Gew % | Bentonitdispersion (10%) in Xylol (MC : B = 10 : 0,67) |
| 3 Gew % | Rheologieadditive (50% in Testbenzin) |
| 2 Gew % | n-Butanol |
| 3 Gew % | Testbenzin |
| 100 Gew % | |

Dieses Beschichtungsmaterial enthielt ca. 60% Festkörper (bestimmt bei 180°C, 30 min), bzw. 42,1 % Pigment, davon 6,4 % (= 15,2 % der Pigmente) Schichtsilikate (MC:B = 10:0,67).

Das Gemisch wurde nach Sprühauftrag auf eine Stahloberfläche, die unmittelbar zuvor sandgestrahlt wurde, 48 Std bei Raumtemperatur getrocknet. In einem weiteren Versuch wurde der Körper 10 Minuten abgelüftet und anschließend forciert getrocknet (für 20 min bei 80°C und für 2 Std bei 60°C). Abschließend wurde die Oberfläche mit Klarlack lt. Beispiel 3 beschichtet.

### Beispiel 3: Klarlackformulierung (Deckschicht)

Eine erfindungsgemäß einsetzbare Formulierung für eine Deckschicht (Klarlack) wies die folgende Zusammensetzung auf:

| | |
|---|---|
| 75 Gew % | Silikoftal ED (EVONIK) |
| 7 Gew % | Degalan LP 65/11 (EVONIK) |
| 2 Gew % | Dioctyl-Zinn-didecanoat |
| 0,2 Gew % | Polysiloxan-Verlaufsmittel |
| 15,8 Gew % | n-Butylacetat |
| 100 Gew % | |

Diese Zusammensetzung wurde kurz vor dessen Anwendung (Topfzeit ca. 6h) mit 17 Gew.-Teilen 3-Aminopropyltrimethoxysilan vermischt und mittels Butylacetat auf Spritzviskosität gebracht. Anschließend wurde die Zusammensetzung auf die Grundbeschichtung gemäß Beispiel 1 und 2 aufgebracht. Nach 10 Minuten Ablüftung wurde bei 80°C 25 Minuten getrocknet.

### Beispiel 4: Vergleichsbeispiel (aus WO 2006/007985)

Aus dem Stand der Technik sind zahlreiche korrosionsbeständige Beschichtungsmaterialien bekannt. Eine beispielhafte Zusammensetzung konnte in der WO 2006/007985 gefunden werden:

| | |
|---|---|
| 18 Gew % | Silikoftal (Silikon-Epoxid-Hybridharz der Fa. EVONIK) |
| 1,6 Gew % | Siliziumdioxid hochdispers. |
| 56 Gew % | Zinkstaub |
| 7 Gew % | Zinklamellen (= zusammen 63 Gew % Metallpigmentanteil) |
| 17,4 Gew % | Lösungsmittel (Solvesso, Methoxypropylacetat) |
| 100 Gew % | |

Dieses Beschichtungsmaterial enthielt 82,6 % Festkörper und 64,6% Pigment, davon 63 % Metallpigment. Nach Applikation dieses Beschichtungsmaterials auf einer metallhaltigen Oberfläche wurde dieses im Zuge einer 30 minütigen Ablüftung bei 130°C vorvernetzt. Anschließend wurde die Oberfläche pulverbeschichtet und für 15-20 Minuten bei 160-200°C fertig vernetzt.

### Beispiel 5: Haftfestigkeit

Um die Haftfestigkeit des erfindungsgemäßen Beschichtungsmaterials auf Stahl im Vergleich zu nicht erfindungsgemäßen Zusammensetzungen zu testen, wurde eine Stahloberfläche sandgestrahlt (Rz ca. 25 µm). Anschließend wurde die Stahloberfläche für ca. 5 Minuten bei Raumtemperatur (ca. 20°C) bei einer relativen Luftfeuchtigkeit von ca. 30% stehen gelassen. Nach Auftragen und Trocknung der Beschichtungsmaterialien auf der Oberfläche wurde die Haftfestigkeit der Schicht mittels Gitterschnitt nach DIN EN ISO 2409 geprüft(siehe auch Kittel, H.: Lehrbuch der Lacke und Beschichtungen Bd. 10 - Analysen und Prüfungen (Hrsg. Otto, Hans-Dieter), S. Hirzel Verlag, Stuttgart; 2. Aufl. 2006, S. 352f). Dabei wurden mit Hilfe eines Cuttermessers und einer Schablone jeweils 6 Schnitte senkrecht und 6 Schnitte waagerecht in die Beschichtung bis zum Untergrund geschnitten. Die Schnittbreite bzw. der Schnittabstand betrug 1 mm. Anschließend wurde ein genormtes Klebeband (Klebkraft von 8 bis 10 N/25 mm) auf das Schnittgitter geklebt, angedrückt und in einer Zeit von 0,5 bis 1 Sekunde in einem Winkel von 60° abgezogen. Die Prüfung der Haftfestigkeit wurde jeweils bei 5 Proben durchgeführt.

| | Formulierung **Vergleichsbeispiel (Beispiel 4)** | Formulierung **Bsp.2 ohne Mikroglimmer ohne Bentonit** | Formulierung **Beispiel 2** |
|---|---|---|---|
| **Schichtdicke** | 10-15 µm | 10-15 µm | 10-15 µm |
| **Gitterschnitt** | Gt **3 - 5*** | Gt **3-5*** | Gt **0** |
| | | | |
| **mit Decklack gem. Bsp.3** (Schichtdicke 8-15 µm) | - | Gt **3-5*** | Gt **0** |

| | | | |
|---|---|---|---|
| * starke Abhängigkeit von der Schichtdicke Gitterschnitt-Kennwert Gt 0 ...sehr gute Haftfestigkeit Gitterschnitt-Kennwert Gt 5 ...sehr schlechte Haftfestigkeit | | | |

## Patentansprüche

1. Beschichtungsmaterial zur Herstellung einer korrosionsbeständigen Beschichtung auf einer oxidierten und/oder hydroxylierten metallischen Oberfläche umfassend
- mindestens ein Bindemittel, das reaktive Gruppen aufweist,
- mindestens ein partikuläres Oxid- und/oder Hydroxylgruppen umfassendes Metall und
- mindestens ein plättchenförmiges Oxid- und/oder Hydroxylgruppen umfassendes nichtmetallisches Partikel,
wobei das Bindemittel in der Lage ist eine kovalente Bindung mit einer oxidierten und/oder hydroxylierten metallischen Oberfläche und den Oxid- und/oder Hydroxylgruppen des mindestens einen partikulären Metalls und des mindestens einen plättchenförmigen nichtmetallischen Partikels auszubilden, wobei das mindestens eine Bindemittel ausgewählt ist aus der Gruppe bestehend aus Alkoxysilanen, Siloxanen, Alkyltitanaten, Titanaten, Alkylzirkonaten, Zirkonaten und Gemischen davon, und wobei das Standardpotential des mindestens einen partikulären Metalls weniger als -0,04 V beträgt.

2. Beschichtungsmaterial nach Anspruch 1, **dadurch gekennzeichnet, dass**
- das Alkoxysilan die Formel (I) 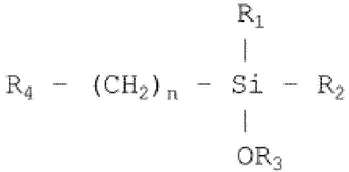 umfasst, wobei R₁ und R₂ unabhängig voneinander ein Wasserstoffatom, ein Alkylrest, eine Phenylgruppe, eine primäre Aminogruppe, eine sekundäre Aminogruppe, eine Alkoxygruppe, eine Carboxyalkylgruppe, eine Epoxyalkylgruppe, eine Acryloxyalkylgruppe oder eine primäre oder sekundäre Aminoalkylgruppe, R₃ ein Wasserstoffatom oder ein Alkylrest und R₄ ein Wasserstoffatom, eine primäre Aminogruppe, eine sekundäre Aminogruppe, eine Alkoxygruppe, eine Carboxyalkylgruppe, eine Epoxyalkylgruppe, eine Acryloxyalkylgruppe, eine primäre oder sekundäre Aminoalkylgruppe, eine Vinylgruppe, eine Oxiranylgruppe, eine Acrylgruppe, eine Methacrylgruppe, eine Mercaptogruppe, eine Isocyanatogruppe oder eine Ureidogruppe darstellt und n eine ganze Zahl von 0 bis 15 ist, und/oder
- das Siloxan die Formel (II) (R₆)₃Si-[O-Si(R₅)₂]ₙ-O-Si(R₆)₃ umfasst, wobei R₅ und R₆ unabhängig voneinander ein Wasserstoffatom, eine Hydroxylgruppe, eine primäre Aminogruppe, eine sekundäre Aminogruppe, eine Alkoxygruppe, eine Carboxyalkylgruppe, eine Epoxyalkylgruppe, eine Acryloxyalkylgruppe, eine primäre oder sekundäre Aminoalkylgruppe, ein Alkylrest, oder ein Phenylrest darstellt und n eine ganze Zahl zwischen 1 und 25, vorzugsweise zwischen 1 und 20, noch mehr bevorzugt zwischen 1 und 15, ist, und/oder
- das Alkyltitanat die Formel (III) Ti(OR₇)₄ umfasst, wobei R₇ ein Alkylrest ist, und/oder
- das Titanat die Formel (IV) (R₉)₃Ti-[O-Ti(R₈)₂]ₙ-O-Ti(R₉)₃ umfasst, wobei R₈ und R₉ unabhängig voneinander ein Wasserstoffatom, eine Hydroxylgruppe, eine Alkoxygruppe, ein Alkylrest, oder ein Phenylrest darstellt und n eine ganze Zahl zwischen 1 und 25, vorzugsweise zwischen 1 und 20, noch mehr bevorzugt zwischen 1 und 15, ist, und/oder
- das Alkylzirkonat die Formel (V) Zr(OR₁₀)₄ umfasst, wobei R₁₀ ein Alkylrest ist, und/oder
- das Zirkonat die Formel (VI) (R₁₂)₃Zr-[O-Zr (R₁₁)₂]ₙ-O-Zr(R₁₂)₃ umfasst, wobei R₁₁ und R₁₂ unabhängig voneinander ein Wasserstoffatom, eine Hydroxylgruppe, eine Alkoxygruppe, ein Alkylrest, oder ein Phenylrest darstellt und n eine ganze Zahl zwischen 1 und 25, vorzugsweise zwischen 1 und 20, noch mehr bevorzugt zwischen 1 und 15, ist.

3. Beschichtungsmaterial nach Anspruch 1 oder 2, **dadurch gekennzeichnet, dass** das Standardpotential des mindestens einen partikulären Metalls weniger als -0,4 V beträgt.

4. Beschichtungsmaterial nach einem der Ansprüche 1 bis 3, **dadurch gekennzeichnet, dass** das mindestens eine partikuläre Metall Zink, Aluminium, Magnesium, Mangan, Zinn, Blei, Nickel und Legierungen davon umfasst.

5. Beschichtungsmaterial nach einem der Ansprüche 1 bis 4, **dadurch gekennzeichnet, dass** das mindestens eine partikuläre Metall eine mittlere Partikelgröße (D50) von 4 bis 20 µm, vorzugsweise von 5 bis 20 µm, noch mehr bevorzugt von 5 bis 15 µm, aufweist.

6. Beschichtungsmaterial nach einem der Ansprüche 1 bis 5, **dadurch gekennzeichnet, dass** das mindestens eine Beschichtungsmaterial mindestens ein Polysaccharid-Ester mit einem Acylierungsgrad von weniger als 3 umfasst.

7. Beschichtungsmaterial nach einem der Ansprüche 1 bis 6, **dadurch gekennzeichnet, dass** das mindestens eine plättchenförmige nichtmetallische Partikel eine mittlere Größe (D50) von 1 nm bis 20 µm, vorzugsweise von 2 nm bis 20 µm, noch mehr bevorzugt von 5 nm bis 15 µm, aufweist.

8. Beschichtungsmaterial nach einem der Ansprüche 1 bis 7, **dadurch gekennzeichnet, dass** das Beschichtungsmaterial mindestens ein plättchenförmiges nichtmetallisches Partikel A, welches eine mittlere Größe (D50) von 4 bis 20 µm, vorzugsweise von 5 bis 20 µm, noch mehr bevorzugt von 5 bis 15 µm, aufweist, und mindestens ein plättchenförmiges nichtmetallisches Partikel B, welches eine mittlere Größe (D50) von weniger als 2 µm, vorzugsweise von weniger als 1,5 µm, noch mehr bevorzugt von weniger als 1 µm, aufweist.

9. Beschichtungsmaterial nach einem der Ansprüche 1 bis 8, **dadurch gekennzeichnet, dass** das mindestens eine plättchenförmige nichtmetallische Partikel ein natürliches oder synthetisches und optional modifiziertes Schichtsilikat ist.

10. Beschichtungsmaterial nach Anspruch 8 oder 9, **dadurch gekennzeichnet, dass** das mindestens eine plättchenförmige nichtmetallische Partikel A ein Schichtsilikat der GlimmerGruppe und/oder der Talk-Pyrophyllit-Gruppe ist, vorzugsweise ausgewählt aus der Gruppe bestehend aus Muskovit, Phlogopit, Biotit und Talk, und das mindestens eine plättchenförmige nichtmetallische Partikel B ein Schichtsilikat der Tonmineral-Gruppe ist, vorzugsweise ausgewählt aus der Gruppe bestehend aus Montmorillonit, Bentonit, Hektorit, Beidellit, Nontronit, Saponit und Kaolinit.

11. Verfahren zur Herstellung einer korrosionsbeständigen Beschichtung auf einer oxidierten und/oder hydroxylierten metallischen Oberfläche umfassend den Schritt des Aufbringens mindestens eines Beschichtungsmaterials nach einem der Ansprüche 1 bis 10 auf die metallische Oberfläche, wobei das mindestens eine partikuläre Metall ein geringeres Standardpotential aufweist als die zu beschichtende metallische Oberfläche.

12. Verfahren nach Anspruch 11, **dadurch gekennzeichnet, dass** die metallische Oberfläche vor dem Aufbringen des mindestens einen Beschichtungsmaterials aufgeraut, vorzugsweise mittels Sandstrahlen, wird.

13. Verfahren nach einem der Anspruch 11 oder 12, **dadurch gekennzeichnet, dass** nach dem Aufbringen des mindestens einen Beschichtungsmaterials oder nach dem Trocknen eine Deckschicht aufgebracht wird, die mindestens ein Bindemittel umfasst, das in der Lage ist eine kovalente Bindung mit einem oder mehreren Bestandteilen des Beschichtungsmaterials auszubilden.

14. Verfahren nach Anspruch 13, **dadurch gekennzeichnet, dass** die Deckschicht mindestens ein siliziummodifiziertes Epoxidharz und/oder mindestens ein siliziummodifiziertes Polyesterharz umfasst.

15. Verfahren nach Anspruch 13 oder 14, **dadurch gekennzeichnet, dass** die Deckschicht mindestens ein Methacrylat-Copolymer und mindestens ein Alkoxysilan umfasst.

## Claims

1. A coating material for the production of a corrosion-resistant coating on an oxidized and/or hydroxylated metallic surface comprising
- at least one binder comprising reactive groups,
- at least one particulate metal comprising oxide and/or hydroxyl groups, and
- at least one platelet-shaped non-metallic particle comprising oxide and/or hydroxyl groups,
wherein the binder is able to form a covalent bond with an oxidized and/or hydroxylated metallic surface and the oxide and/or hydroxyl groups of the at least one particulate metal and of the at least one platelet-shaped non-metallic particle, wherein the at least one binder being selected from the group consisting of alkoxysilanes, siloxanes, alkyl titanates, titanates, alkyl zirconates, zirconates and mixtures thereof, and wherein the standard potential of the at least one particulate metal is less than -0.04 V.

2. Coating material according to claim 1, **characterized in that**
- the alkoxysilane comprises the formula (I) 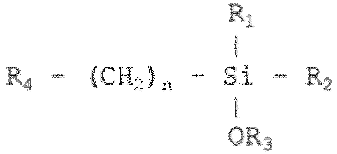 wherein R₁ and R₂ independently of one another represent a hydrogen atom, an alkyl moiety, a phenyl group, a primary amino group, a secondary amino group, an alkoxy group, a carboxyalkyl group, an epoxyalkyl group, an acryloxyalkyl group or a primary or secondary aminoalkyl group, R₃ represents a hydrogen atom or an alkyl moiety, and R₄ represents a hydrogen atom, a primary amino group, a secondary amino group, an alkoxy group, a carboxyalkyl group, an epoxyalkyl group, an acryloxyalkyl group, a primary or secondary aminoalkyl group, a vinyl group, an oxiranyl group, an acrylic group, a methacrylic group, a mercapto group, an isocyanato group or an ureido group and n is an integer from 0 to 15, and/or
- the siloxane comprises the formula (II) (R₆)₃Si-[O-Si(R₅)₂]ₙ-O-Si(R₆)₃, wherein R₅ and R₆ independently of one another represent a hydrogen atom, a hydroxyl group, a primary amino group, a secondary amino group, an alkoxy group, a carboxyalkyl group, an epoxyalkyl group, an acryloxyalkyl group, a primary or secondary aminoalkyl group, an alkyl moiety, or a phenyl moiety and n is an integer between 1 and 25, preferably between 1 and 20, more preferably between 1 and 15, and/or
- the alkyl titanate comprises the formula (III) Ti (OR₇)₄, wherein R₇ is an alkyl moiety, and/or
- the titanate comprises the formula (IV) (R₉)₃Ti-[O-Ti(R₈)₂]ₙ-O-Ti(R₉)₃, wherein R₈ and R₉ independently of one another represent a hydrogen atom, a hydroxyl group, an alkoxy group, an alkyl moiety, or a phenyl moiety and n is an integer between 1 and 25, preferably between 1 and 20, more preferably between 1 and 15, and/or
- the alkyl zirconate comprises the formula (V) Zr(OR₁₀)₄, wherein R₁₀ is an alkyl moiety, and/or
- the zirconate comprises the formula (VI) (R₁₂)₃Zr-[O-Zr(R₁₁)₂]ₙ-O-Zr(R₁₂)₃, wherein R₁₁ and R₁₂ independently of one another represent a hydrogen atom, a hydroxyl group, an alkoxy group, an alkyl moiety, or a phenyl moiety and n is an integer between 1 and 25, preferably between 1 and 20, more preferably between 1 and 15.

3. Coating material according to claim 1 or 2, **characterized in that** the standard potential of the at least one particulate metal is less than -0.4 V.

4. Coating material according to any one of claims 1 to 3, **characterized in that** the at least one particulate metal comprises zinc, aluminium, magnesium, manganese, tin, lead, nickel and alloys thereof

5. Coating material according to any one of claims 1 to 4, **characterized in that** the at least one particulate metal has an average particle size (D50) from 4 to 20 µm, preferably from 5 to 20 µm, more preferably from 5 to 15 µm.

6. Coating material according to any one of claims 1 to 5, **characterized in that** the at least one coating material comprises at least one polysaccharide ester with a degree of acylation of less than 3.

7. Coating material according to any one of claims 1 to 6, **characterized in that** the at least one platelet-shaped non-metallic particle has an average size (D50) from 1 nm to 20 µm, preferably from 2 nm to 20 µm, more preferably from 5 nm to 15 µm.

8. Coating material according to any one of claims 1 to 7, **characterized in that** the coating material has at least one platelet-shaped non-metallic particle A, which has an average size (D50) from 4 to 20 µm, preferably from 5 to 20 µm, more preferably from 5 to 15 µm, and at least one platelet-shaped non-metallic particle B, which has an average size (D50) of less than 2 µm, preferably less than 1.5 µm, more preferably less than 1 µm.

9. Coating material according to any one of claims 1 to 8, **characterized in that** the at least one platelet-shaped non-metallic particle is a natural or synthetic and optionally modified phyllosilicate.

10. Coating material according to claim 8 or 9, **characterized in that** the at least one platelet-shaped non-metallic particle A is a phyllosilicate from the mica group and/or the talc pyrophyllite group, preferably selected from the group consisting of muscovite, phlogopite, biotite and talc, and the at least one platelet-shaped non-metallic particle B is a phyllosilicate of the clay-mineral group, preferably selected from the group consisting of montmorillonite, bentonite, hectorite, beidellite, nontronite, saponite and kaolinite.

11. A method for the production of a corrosion-resistant coating on an oxidized and/or hydroxylated metallic surface comprising the step of applying at least one coating material according to any one of claims 1 to 10 onto the metallic surface, wherein the at least one particulate metal has a lower standard potential than the metallic surface to be coated.

12. Method according to claim 11, **characterized in that** the metallic surface is roughened, preferably by means of sandblasting, prior to the application of the at least one coating material.

13. Method according to any one of claims 11 or 12, **characterized in that**, after the application of the at least one coating material or after drying, a covering layer is applied which comprises at least one binder which is able to form a covalent bond with one or more components of the coating material.

14. Method according to claim 13, **characterized in that** the covering layer comprises at least one silicon-modified epoxy resin and/or at least one silicon-modified polyester resin.

15. Method according to claim 13 or 14, **characterized in that** the covering layer comprises at least one methacrylate copolymer and at least one alkoxysilane.

## Revendications

1. Matériau de revêtement pour la production d'un revêtement résistant à la corrosion sur une surface métallique oxydée et/ou hydroxylée, comprenant :
au moins un liant, qui présente des groupes réactifs,
au moins un métal particulaire comprenant des groupes oxyde ou hydroxyle, et
au moins une particule non métallique en forme de plaquette comprenant des groupes oxyde et/ou hydroxyle,
dans lequel le liant est capable de former une liaison covalente avec une surface métallique oxydée et/ou hydroxylée et les groupes oxyde et/ou hydroxyle dudit au moins un métal particulaire et de ladite au moins une particule non métallique en forme de plaquette, dans lequel ledit au moins un liant est choisi dans le groupe composé des alcoxysilanes, des siloxanes, des alkyltitanates, des titanates, des alkylzirconates, des zirconates ainsi que de mélanges de ceux-ci, et dans lequel le potentiel standard dudit au moins un métal particulaire est inférieur à -0,04 V.

2. Matériau de revêtement selon la revendication 1, **caractérisé en ce que** :
l'alcoxysilane comprend la formule (I) 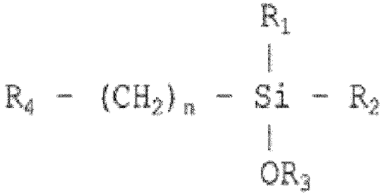
dans laquelle R₁ et R₂ représentent, indépendamment l'un de l'autre, un atome d'hydrogène, un radical alkyle, un groupe phényle, un groupe amino primaire, un groupe amino secondaire, un groupe alcoxy, un groupe carboxyalkyle, un groupe époxyalkyle, un groupe acryloxyalkyle, ou un groupe aminoalkyle primaire ou secondaire, R₃ représente un atome d'hydrogène ou un radical alkyle, R₄ représente un atome d'hydrogène, un groupe amino primaire, un groupe amino secondaire, un groupe alcoxy, un groupe carboxyalkyle, un groupe époxyalkyle, un groupe acryloxyalkyle, un groupe amino primaire ou secondaire, un groupe vinyle, un groupe oxiranyle, un groupe acryle, un groupe méthacryle, un groupe mercapto, un groupe isocyanate ou un groupe uréido, et n est un nombre entier de 0 à 15, et/ou le siloxane comprend la formule (II) (R₆)₃Si-[O-Si(R₅)₂]ₙ-O-Si(R₆)₃, dans laquelle R₅ et R₆ représentent, indépendamment l'un de l'autre, un atome d'hydrogène, un groupe hydroxyle, un groupe amino primaire, un groupe amino secondaire, un groupe alcoxy, un groupe carboxyalkyle, un groupe époxyalkyle, un groupe acryloxyalkyle, un groupe amino primaire ou secondaire, un radical alkyle ou un radical phényle, et n est un nombre entier entre 1 et 25, de préférence entre 1 et 20, de préférence encore entre 1 et 15, et/ou
l'alkyltitanate comprend la formule (III) Ti(OR₇)₄, dans laquelle R₇ est un radical alkyle, et/ou
le titanate comprend la formule (IV) (R₉)₃Ti-[O-Ti(R₈)₂]ₙ-O-Ti(R₉)₃, dans laquelle R₈ et R₉ représentent, indépendamment l'un de l'autre, un atome d'hydrogène, un groupe hydroxyle, un groupe alcoxy, un radical alkyle ou un radical phényle, et n est un nombre entier entre 1 et 25, de préférence entre 1 et 20, de préférence encore entre 1 et 15, et/ou
l'alkylzirconate comprend la formule (V) Zr(OR₁₀)₄, dans laquelle R₁₀ est un radical alkyle, et/ou
le zirconate comprend la formule (VI) (R₁₂)₃Zr-[O-Zr(R₁₁)₂]ₙ-O-Zr(R₁₂)₃, dans laquelle R₁₁ et R₁₂ représentent, indépendamment l'un de l'autre, un atome d'hydrogène, un groupe hydroxyle, un groupe alcoxy, un radical alkyle ou un radical phényle, et n est un nombre entier entre 1 et 25, de préférence entre 1 et 20, de préférence encore entre 1 et 15.

3. Matériau de revêtement selon la revendication 1 ou 2, **caractérisé en ce que** le potentiel standard dudit au moins un métal particulaire est inférieur à -0,4 V.

4. Matériau de revêtement selon l'une quelconque des revendications 1 à 3, **caractérisé en ce que** ledit au moins un métal particulaire comprend du zinc, de l'aluminium, du magnésium, du manganèse, de l'étain, du plomb, du nickel ainsi que des alliages de ceux-ci.

5. Matériau de revêtement selon l'une quelconque des revendications 1 à 4, **caractérisé en ce que** ledit au moins un métal particulaire présente une taille de particule moyenne (D50) comprise entre 4 et 20 µm, de préférence entre 5 et 20 µm, et de préférence encore entre 5 et 15 µm.

6. Matériau de revêtement selon l'une quelconque des revendications 1 à 5, **caractérisé en ce que** ledit au moins un matériau de revêtement comprend au moins un ester de polysaccharide qui présente un taux d'acétylation inférieur à 3.

7. Matériau de revêtement selon l'une quelconque des revendications 1 à 6, **caractérisé en ce que** ladite au moins une particule non métallique en forme de plaquette présente une taille moyenne (D50) comprise entre 1 nm et 20 µm, de préférence entre 2 nm et 20 µm, et de préférence encore entre 5 nm et 15 µm.

8. Matériau de revêtement selon l'une quelconque des revendications 1 à 7, **caractérisé en ce que** le matériau de revêtement comprend au moins une particule non métallique A en forme de plaquette, qui présente une taille moyenne (D50) comprise entre 4 et 20 µm, de préférence entre 5 et 20 µm, et de préférence encore entre 5 et 15 µm, et au moins une particule non métallique B en forme de plaquette, qui présente une taille moyenne (D50) inférieure à 2 µm, de préférence inférieure à 1,5 µm, et de préférence encore inférieure à 1 µm.

9. Matériau de revêtement selon l'une quelconque des revendications 1 à 8, **caractérisé en ce que** ladite au moins une particule non métallique en forme de plaquette est un silicate stratifié naturel ou synthétique, optionnellement modifié.

10. Matériau de revêtement selon la revendication 8 ou 9, **caractérisé en ce que** ladite particule non métallique A en forme de plaquette est un silicate stratifié du groupe du mica et/ou du groupe talc-pyrophyllite, de préférence choisi dans le groupe composé de la muscovite, de la phlogopite, de la biotite et de la stéatite, et ladite au moins une particule non métallique B en forme de plaquette est un silicate stratifié du groupe minéral argileux, de préférence choisi dans le groupe composé de la montmorillonite, de la bentonite, de l'hectorite, de la beidellite, de la nontronite, de la saponite et de la kaolinite.

11. Procédé de production d'un revêtement résistant à la corrosion sur une surface métallique oxydée et/ou hydroxylée, comprenant l'étape de dépôt d'au moins un matériau de revêtement selon l'une quelconque des revendications 1 à 10 sur la surface métallique, dans lequel ledit au moins un métal particulaire présente un potentiel standard plus faible que la surface métallique à revêtir.

12. Procédé selon la revendication 11, **caractérisé en ce que** la surface est dépolie, de préférence par grenaillage, avant le dépôt dudit au moins un matériau de revêtement.

13. Procédé selon l'une quelconque des revendications 11 ou 12, **caractérisé en ce qu'**après le dépôt dudit au moins un matériau de revêtement ou après le séchage, on applique une couche de recouvrement qui comprend au moins un liant et qui est capable de former une liaison covalente avec un ou plusieurs des composants du matériau de revêtement.

14. Procédé selon la revendication 13, **caractérisé en ce que** la couche de recouvrement comprend au moins une résine époxy modifiée au silicium et/ou au moins une résine de polyester modifiée au silicium.

15. Procédé selon la revendication 13 ou 14, **caractérisé en ce que** la couche de recouvrement comprend au moins un copolymère de méthacrylate et au moins un alcoxysilane.
